# EUROPEAN PATENT SPECIFICATION

(11) **EP 3 058 238 B1**
(45) Date of publication and mention of the grant of the patent: **26.04.2017**
(21) Application number: 14812826.7
(22) Date of filing: 08.10.2014
(51) Int. Cl.: F16B 21/08, F16B 37/04, F25D 23/00

(54) **APPLIANCE FASTENING APPARATUS**
ANWENDUNGSBEFESTIGUNGSVORRICHTUNG
APPAREIL DE FIXATION DE DISPOSITIF

(30) Priority: 14.10.2013 US 201361890655 P
(43) Date of publication of application: 24.08.2016
(73) Proprietor: A. Raymond et Cie, 38000 Grenoble (FR)
(72) Inventor: KILGORE, Dorian, Commerce Township, Michigan 48382 (US); EVANGELISTA, Elio, Chesterfield, Michigan 48051 (US); TELLER, William, Lake Orion, Michigan 48360 (US)
(74) Representative: Regimbeau
(86) International application number: PCT/US2014/059690
(87) International publication number: WO 2015/057452

(56) References cited:
- DE-A1-102005 050 513
- DE-A1-102009 027 731
- FR-A1- 2 275 680

## Description

### CROSS-REFERENCE TO RELATED APPLICATIONS

This application claims the benefit of U.S. Provisional Application No. 61/890,655, filed on October 14, 2013, which is incorporated by reference herein.

### BACKGROUND AND SUMMARY

The present invention relates generally to appliance fastening apparatuses and more particularly to a fastener attached to a hole in an appliance.

It is common to employ many sheet metal anchor nuts to secure screws extending through a hole within an internal liner of a refrigerator appliance. These screws are typically used to attach shelf mounting brackets within the liner. Examples of such anchoring devices are disclosed in U.S. Patent Nos.: 4,647,263 entitled "Nut Plate Fastener" which issued to Macfee, Jr. et al. on March 3, 1987; 4,325,178 entitled "Screw Anchoring Device and Method" which issued to Pruehs on April 20, 1982; and 3,802,476 entitled "Screw Anchor" which issued to Hoadley on April 9, 1974, all of which are incorporated by reference herein. Document FR2275680 teaches an appliance having a structural wall having a hole, and a fastener comprising at least one barbed leg engaging the hole and a head including at least one anti-rotational surface which is held substantially stationary.

In commercial practice, the most common type are those like the '178 Pruehs patent, however, a double-sided, pressure sensitive adhesive tape is required between the flat portion of the fastener and an exterior surface of the liner. This extra adhesive tape is intended to both seal the liner hole against insulating foam leakage and to also supplementally secure the fastener to the liner while the foam is injected into the appliance between the liner and an outer metallic shell. Nevertheless, in practice, the foam injection still disengages and displaces one or more of the many fasteners which then necessitates scrapping the entire appliance since it is cost prohibitive to rectify the internal fastener placement after the foam has been injected. In an effort to overcome this problem, an operator is often forced to manually apply a second layer of adhesive tape external to the fastener to supplementally hold it against the liner prior to foam injection. Needless to say, placement of a single adhesive tape layer, let alone two, for each of many screw anchoring fasteners is very labor intensive and expensive, yet is still prone to displacement concerns when the foam is injected. Furthermore, a reduction in foam leakage is desired in order to reduce manual rework and aesthetic concerns inside the liner.

In accordance with the present invention, an appliance fastening apparatus is provided. In another aspect, a polymeric fastener includes an anti-rotational formation or surface. Another aspect of the appliance fastening apparatus includes a polymeric section essentially encapsulating a metallic nut therein. In yet another aspect, flexible polymeric barbed legs extend through a hole in an appliance wall such that wedge-shaped or barbed sections thereof are essentially on an opposite surface of the appliance wall from a polymeric head and/or metallic nut coupled thereto. A further aspect employs a flexible and polymeric umbrella to assist in deterring insulating material from leaking through an appliance hole. A method of using and/or manufacturing a polymeric appliance fastener is also provided.

The present appliance fastening apparatus is advantageous over traditional devices. For example, the present fastener will not be dislocated or removed during foam insertion. Furthermore, the present fastener deters foam leakage through the appliance hole without requiring adhesive tape. Moreover, the present apparatus is advantageously useful for a hole in an appliance interior liner, such as to secure shelf bracketry, and is also usable for a hole in an exterior shell of the appliance such as to secure a leveling or anti-tipping foot. Additional advantages and features of the present invention will become apparent from the following description and associated claims, taken in conjunction with the accompanying drawings.

### BRIEF DESCRIPTION OF THE DRAWINGS

Figure 1 is a perspective view showing an appliance including multiples of the present appliance fastening apparatus;
Figure 2 is an interior perspective view, taken within circle 2 of Figure 1, showing the present appliance fastening apparatus;
Figure 3 is a cross-sectional view, taken along line 3-3 of Figure 2, showing the present appliance fastening apparatus;
Figure 4 is an exterior perspective view, taken generally opposite that of Figure 2, showing the present appliance fastening apparatus;
Figure 5 is a perspective view showing a nut employed in the present appliance fastening apparatus;
Figure 6 is an exterior elevational view, taken generally in the direction of Figure 4, showing the present nut;
Figure 7 is a side elevational view showing the present nut;
Figure 8 is a side elevational view, taken opposite that of Figure 7, showing the present nut;
Figure 9 is a cross-sectional view, taken along line 9-9 of Figure 6, showing the present nut;
Figure 10 is a perspective view, taken generally in the same direction as Figure 2, showing a preferred fastener employed in the present appliance fastening apparatus;
Figure 11 is a perspective view, generally taken in the direction of Figure 4, showing the present fastener;
Figure 12 is a cross-sectional view, taken along line 12-12 of Figure 11, showing the present fastener;
Figure 13 is a cross-sectional view, taken along line 3-3 of Figure 2, showing the present appliance fastening apparatus prior to insertion of a threaded screw;
Figure 14 is a perspective view showing an alternate embodiment fastener employed with the present appliance fastening apparatus;
Figure 15 is a perspective view, taken generally opposite that of Figure 14, showing the alternate embodiment fastener; and
Figure 16 is a cross-sectional view, taken along line 16-16 of Figure 1, showing the present appliance fastening apparatus used with a leg leveler.

### DETAILED DESCRIPTION

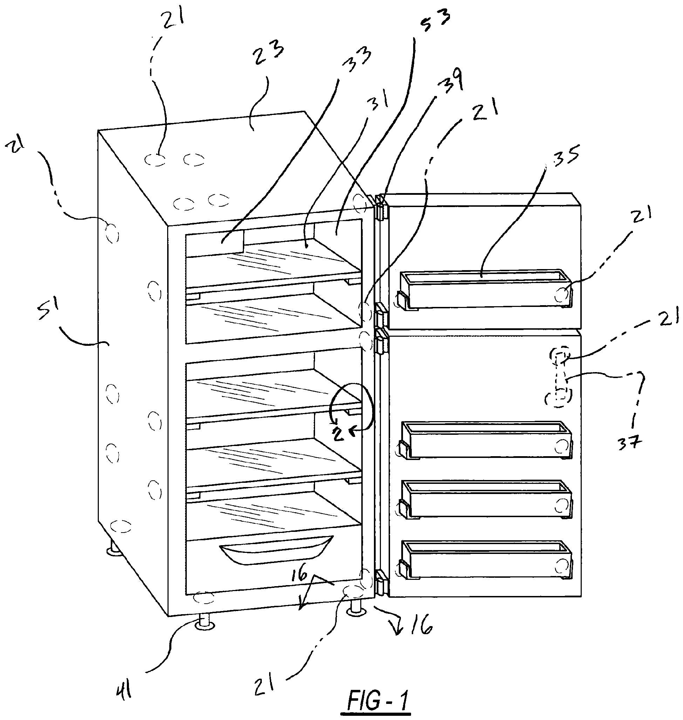

Referring to Figures 1-4 and 10-13, the appliance fastening apparatus 21 of the present invention includes an appliance 23, also known as a white good, a fastener 25 and a threaded screw 27, which includes an elongated shaft and can alternately be a bolt. Screw 27 retains a bracket 29 supporting a moveable internal appliance shelf 31, ice maker or water dispenser 33, door shelves 35, exterior handles 37, hinges 39 or foot levelers 41. The preferred appliance 23 is a refrigerator or freezer, as shown, but may alternately include a stove and oven appliance, a dishwasher appliance, a clothes washing machine appliance, a clothes dryer appliance, or the like. Fasteners and foot levelers of such alternate appliances may be replaced by those of the present disclosure, and are shown in the following U.S. Patent Nos.: 7,959,742 entitled "Outer Support Body for a Drawer-Type Dishwasher" which issued to Cordill et al. on June 14, 2011; 6,533,238 entitled "Versatile Anti-Tip Bracket for an Appliance" which issued to Barnes et al. on March 18, 2003; and 4,890,813 entitled "Anti-Tip Bracket for Ranges" which issued to Johnson et al. on January 2, 1990; all of which are incorporated by reference herein.

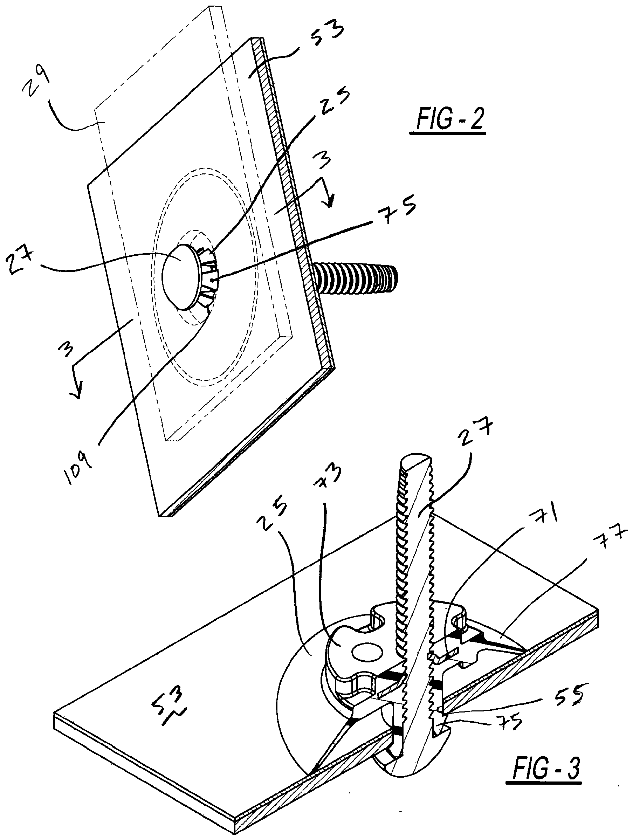

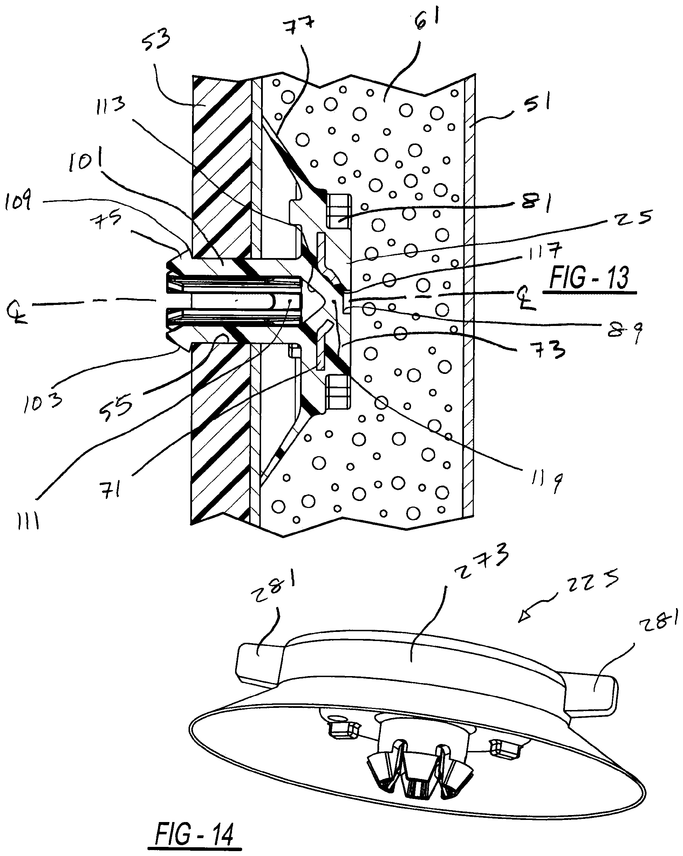

The preferred refrigerator and freezer appliance 23 further include a structural, outer metallic shell or wall 51 and an interior liner or wall 53 which is a structural, thermo-formed or vacuum formed polymeric member. A hole 55 (see Figures 3 and 13), is punched through inner or outer walls, 53 and 51 respectively, in multiple locations depending upon where through fasteners are desired. After fastener 25 has been attached to hole 55 in the interior or exterior walls, and the inner liner 53 has been assembled to shell 51, an insulating material, such as a liquid and expandable polyurethane foam 61 is injected or poured between the inner and outer walls and in contact with the exposed portions of fastener 25.

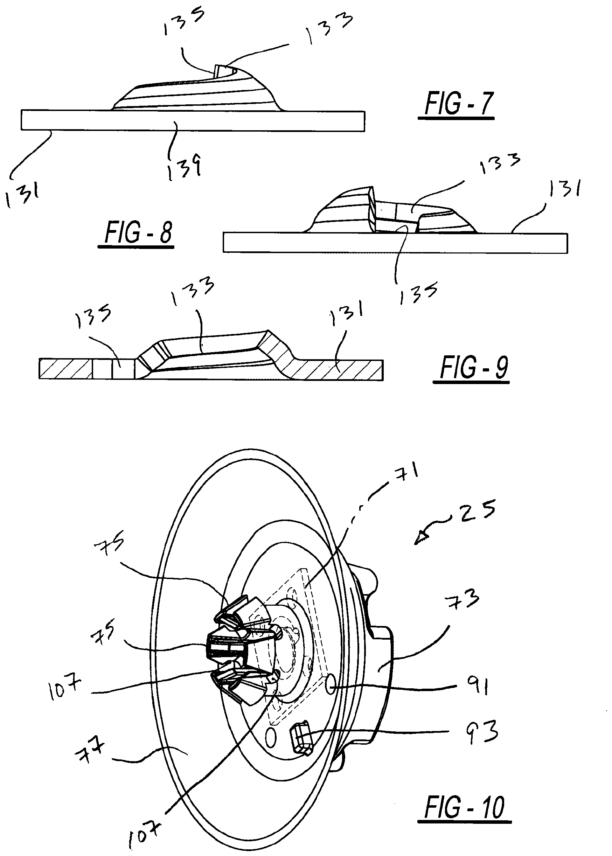

Referring now to Figures 10-13, fastener 25 is entirely injection molded from a polymeric material, such as polypropylene or ABS, but for a metallic nut 71. Fastener 25 includes a generally circular-cylindrical head 73, barbed legs 75 and a flexible and frusto-conically shaped umbrella 77, all integrally made as a single piece from the polymeric material. Head 73 includes at least two and more preferably four recessed cavities 81 which radially project away from a centerline of the fastener co-axially aligned with hole 55. The injected foam 61 engages and contacts within recessed cavities 81 and the upstanding surface formations defining such, thereby serving as anti-rotational features after the foam cures. Screw 27 is inserted into the nut as will be later discussed. Passageways 83 are also located in an otherwise generally flat surface 85 of head in a generally parallel direction to the centerline of the part. These passageways 83 provide access for locating pins to support nut 71 during the insert molding process used to create the polymeric portions of fastener 25 encapsulating the nut. A partial passageway 89 is located within head 73 aligned with centerline. Additional passageways 91 are also positioned in the under surface of head 85 to allow molding pin support for nut 71. Additionally, ribs 93 project from the under surface of head 73 to deter over compression of umbrella 77 during insertion of leg 75 into the appliance hole 55, during foam injection, and/or during over-torquing of threaded screw 27.

Each polymeric leg 75 includes a medial stem section 101 and a wedge shaped or barbed end section 103 having internal and external tapers on tips thereof. The external and laterally facing surfaces (i.e., opposite a hollow bore 111) of each leg has an arcuate shape such that when the legs are all compressed together toward the centerline, they generally define circular cross-sections along the length thereof. Each leg 75 is spaced apart from its adjacent neighbors in a partially severed manner by slotted openings 107 having terminal points of which are preferably slighting spaced away from the underside surface of head 73 depending upon the leg flexure and stiffness desired. The triangular point 109 of each barbed section extends completely through hole 55 in the appliance wall such that point 109 is on an opposite surface of the wall from umbrella 77 and head 73.

A generally cylindrical, hollow bore 111 projects within legs 75 coaxial with the centerline. This bore 111 preferably terminates in a generally conical end 113 internal to head 73 and aligned with a centerline of an aperture 117 of nut 71. The very thin distance between the end of bore 111 and the bottom of partial passageway 89 is little more than molding flash which defines a bridging segment 119 spanning across aperture 117 of nut 71. Bridging segment 119 assists in sealing the fastener to deter foam from leaking through the appliance hole 55. Bridging segment 119 is frangible or breakable upon piercing insertion of threaded screw 27. It is preferred that threaded screw 27 have a flat or rounded distal end such that it need not be a self-piercing screw, however, a self-piercing screw can alternately be employed. At least one flexible barbed leg is employed, more preferably at least three such legs are used, and it is most preferable to use six equilaterally spaced apart legs, especially if a circular hole is employed in the appliance wall.

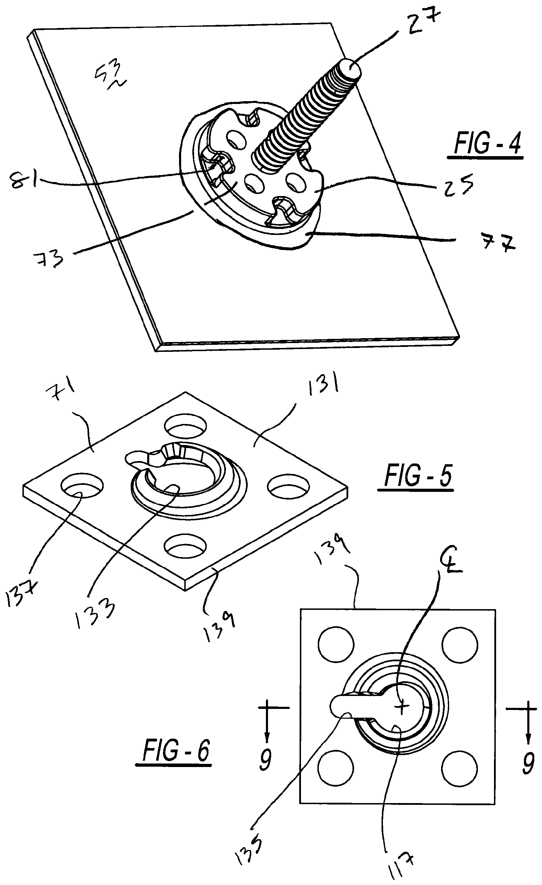

Nut 71 is best illustrated in Figures 5-9. Nut 71 is preferably stamped from carbon mild, spring or stainless steel having a Rockwell hardness of approximately 30 newtons. It is designed as a lock nut having a generally flat and uniformly dimensioned body 131 and a central raised dome area defining a single thread internal edge 133 creating a generally spirally circular part of its aperture 117. A single slot 135 is also cut from one side of aperture 117 to allow for flexed expansion of thread 133 during threaded screw engagement. Openings 137 are also provided in body 131 to allow for polymeric flow through during the insert molding to maintain a better engagement between the polymeric head and metallic nut of the fastener. Additionally, a periphery 139 of nut is generally polygonal, and more preferably square, with essentially flat edge surfaces to further minimize rotation of the nut relative to the polymeric head during screw insertion.

Figures 2 through 4 and 13 show fastener 25 manually attached to wall 53 of appliance. In this condition, legs 75 of fastener 25 are snap-fit inserted through hole 55. Foam 61 is injected thereagainst whereby flexed umbrella 77 and bridging segment 119 act to seal foam 61 from leaking through hole 55. Thereafter, threaded screw 27 is manually screwed into engagement within hollow channel 111 and then with the internally threaded aperture 117 of nut 71 as it pierces through the bridging segment of polymeric material spanning thereacross. The distal end of threaded screw 27 continues to extend through partial passageway 89 and then into foam 61.

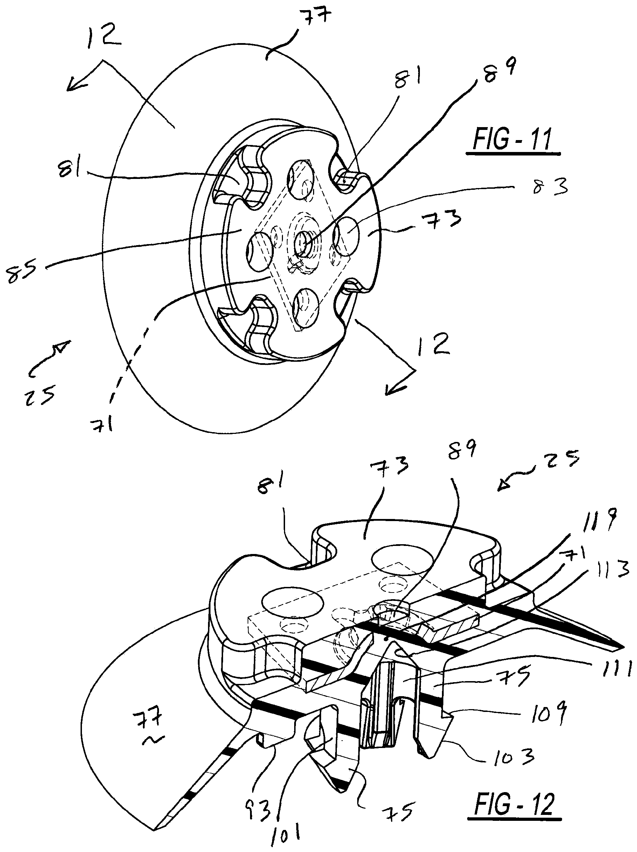

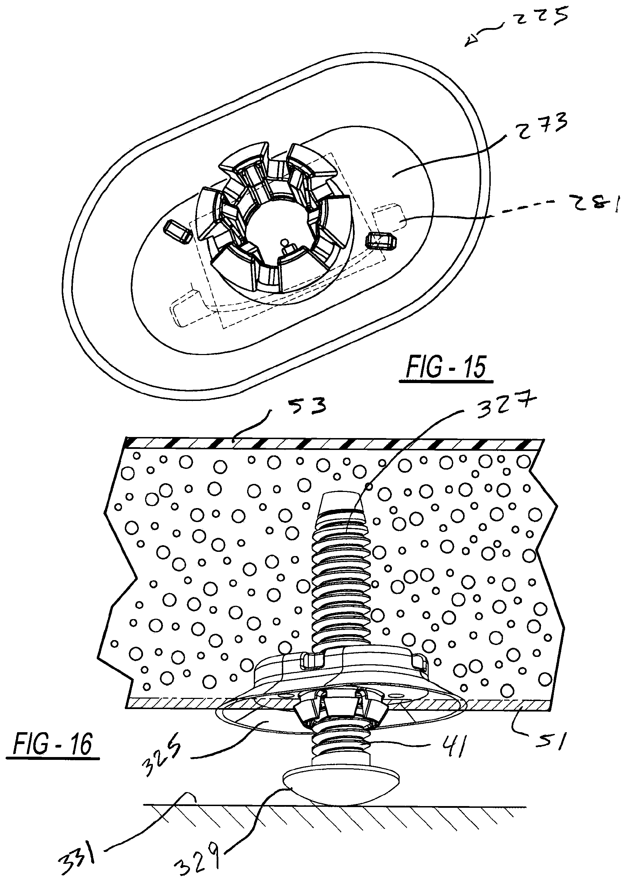

An alternate configuration of fastener 225 is illustrated in Figures 14 and 15. This construction is identical with the prior fastener, however, a head 275 has radially and laterally projecting wall formations 281 thereon instead of recessed cavities as in the prior embodiment. The only other noteworthy difference in the fastener embodiments is that the present fastener 225 also has a generally oval shaped head and umbrella periphery instead of the prior circular shape. It may alternately be defined as a substantially elliptical-cylindrical periphery. It should be appreciated that the anti-rotational features 81 (see Figure 11) or 281 (see Figure 14) can be interchanged between each other and/or added to the other.

Figure 16 illustrates the same fastener 325 of either of the prior embodiments. In this configuration, however, a threaded shaft 327 constitutes a leg leveler wherein a foot 329 contacts a floor 331 such that location of leg leveler 327 relative to fastener 325 adjusts the height of the appliance relative to the floor.

While various embodiments of the present invention have been disclosed, it should be appreciated that other variations may be employed. For example, while a stamped sheet metal nut is disclosed, it should alternately be clear that a cast, machined, sintered, or even injection molded polymeric nut may be used, although the present cost and strength benefits may not be obtained. Furthermore, additional polymeric sections may be constructed between the legs, umbrella, head and anti-rotational surfaces, and/or appended thereto, although some of the present cost and packaging benefits may not be realized. Additionally, the presently disclosed arcuate leg, umbrella, and head peripheries may be substituted with one or more straight surfaces, especially if the appliance hole shape is rectangular, however, certain advantages may not be realized.

## Claims

1. An appliance apparatus (21) comprising:
(a) an appliance (23) comprising a structural wall (51, 53), having a hole (55), and foam (61) located against the wall;
(b) a fastener (25, 325) comprising at least one polymeric barbed leg (75) and a polymeric head (73, 373), the at least one barbed leg operably engaging through the hole (55) in the wall, the head (73, 273) including at least one anti-rotational surface (81, 281) which is held substantially stationary when contacted by the foam (61), and a metallic thread-engaging surface located adjacent the head and aligned with the hole (55) of the wall; and
(c) a flexible polymeric umbrella (77) extending from the fastener (25, 325), the umbrella contacting against a surface of the wall and deterring leakage of the foam (61) through the hole (55) in the wall.

2. The appliance apparatus of Claim 1, wherein the thread-engaging surface is part of a metallic nut (71) attached to the head (73, 273), the nut including at least one flat peripheral surface.

3. The appliance apparatus of Claim 2, wherein the metallic nut (71) is substantially encapsulated within the polymeric head (73, 273), and the at least one polymeric barbed leg (75) includes a point outwardly facing away from a centerline of the hole (55) of the wall (51, 53), and the point is inserted completely through the hole (55).

4. The appliance apparatus of Claim 2, wherein the metallic nut (71) is stamped sheet steel including a central aperture (117) defining an internal thread (133), and the metallic nut (71) further includes a substantially polygonal body (131) to prevent rotation of the nut (71) relative to the polymeric fastener head (73).

5. The appliance apparatus of Claim 1, further comprising an externally threaded shaft (27, 327) inserted into the hole (55) of the wall between at least a pair of the barbed legs (75), the shaft enmeshing with the thread-engaging surface of the fastener (25, 325), and the wall is a polymeric interior liner (53) of the appliance (23).

6. The appliance apparatus of Claim 1, further comprising:
a shaft (27, 327) having a head and an opposite end;
the polymeric head (73, 273) entirely encapsulating all of the thread-engaging surface, which is metallic, including a bore therein, at least prior to insertion of the shaft (27, 327); and
an end of the shaft (27, 327) piercing through a thin section of polymeric material of the fastener aligned with the hole (55), when the shaft (27, 327) is inserted through the entire fastener (25, 325).

7. The appliance apparatus of Claim 1, wherein the anti-rotational surface of the fastener (25) includes a recessed cavity (81).

8. The appliance apparatus of Claim 1, wherein the anti-rotational surface of the fastener (325) includes a laterally projecting wall (281) radially extending relative to the head (273).

9. The appliance apparatus of Claim 1, wherein the fastener (25, 325) is secured to the appliance (23) by at least three of the polymeric barbed legs (75) and free of an adhesive, at least prior to contact by the foam (61), and the legs (75) all have a curved outer surface which engages against the hole (55) which is circular.

10. The appliance apparatus of Claim 1, further comprising a shelf bracket secured to the fastener by an externally threaded shaft (327) engaging the thread-engaging surface of the fastener (25, 325), and the appliance (23) is at least one of : (a) a refrigerator, or (b) a freezer.

11. The appliance apparatus of Claim 1, further comprising a rotatable leg leveler moveably attached to the fastener (25, 325), and the wall is an exterior metallic shell (51).

12. A method of securing a fastener (25, 325) to an appliance (23), the method comprising:
(a) aligning a nut (71), attached to the fastener (25, 325), with a hole (55) in the appliance (23);
(b) inserting barbed legs (75) of the fastener (25, 325) into the hole (55) in the appliance;
(c) compressing a flexible umbrella (77) of the fastener (25, 325) against a surface of the appliance (23), the umbrella substantially co-axially surrounding one side of the hole (55);
(d) inserting an insulative foam (61) adjacent the surface of the appliance and against the umbrella (77) of the fastener; and
(e) deterring leakage of the insulative foam (61) through the hole at least in part of by the umbrella (77).

13. The method of Claim 12, further comprising stamping the nut (71) from sheet metal prior to it being encapsulated by a polymeric material of the fastener (25, 325).

14. The method of Claim 12, further comprising inserting the insulative foam (61) against anti-rotational polymeric formations (81, 281) of the fastener (25) without the use of adhesive tape to secure or seal the fastener (25, 325) to the appliance (23).

## Patentansprüche

1. Vorrichtungsgerät (21), umfassend:
(a) eine Vorrichtung (23), umfassend eine Strukturwand (51, 53) mit einem Loch (55) und einen Schaum (61), der gegen die Wand angeordnet ist;
(b) eine Befestigung (25, 325), umfassend wenigstens einen polymerischen, stacheligen Fuß (75) und einen polymerischen Kopf (73, 373), wobei der wenigstens eine stachelige Fuß bedienbar durch das Loch (55) in die Wand eingreift, wobei der Kopf (73, 273) wenigstens eine Antirotationsfläche (81, 281) einschließt, die im Wesentlichen stationär gehalten wird, wenn sie durch den Schaum (61) kontaktiert wird, und eine metallische, gewindeeingreifende Fläche, die anliegend zu dem Kopf angeordnet und mit dem Loch (55) der Wand gefluchtet ist; und
(c) einen flexiblen polymerischen Schirm (77), der sich von der Befestigung (25, 325) erstreckt, wobei der Schirm gegen eine Fläche der Wand kontaktiert und Lecks des Schaums (61) durch das Loch (55) in der Wand verhindert.

2. Vorrichtungsgerät gemäß Anspruch 1, wobei die gewindeeingreifende Fläche Teil eines Metallbolzens (71) ist, der am Kopf (73, 273) befestigt ist, wobei der Bolzen wenigstens eine flache umlaufende Fläche umfasst.

3. Vorrichtungsgerät gemäß Anspruch 2, wobei der Metallbolzen (71) im Wesentlichen innerhalb des polymerischen Kopfes (73, 273) verkapselt ist und der wenigstens eine stachelige polymerische Fuß (75) einen auswärts von einer Mittellinie des Lochs (55) der Wand (51, 53) gerichteten Punkt einschließt und der Punkt komplett durch das Loch (55) eingefügt ist.

4. Vorrichtungsgerät gemäß Anspruch 2, wobei der Metallbolzen (71) geprägtes Blech ist, das eine zentrale Öffnung (117) einschließt, die einen internen Faden (133) definiert und der Metallbolzen (71) weiterhin einen im Wesentlichen polygonalen Körper (131) einschließt, um die Rotation des Bolzens (71) relativ zu dem polymerischen Befestigungskopf (73) zu verhindern.

5. Vorrichtungsgerät gemäß Anspruch 1, weiterhin umfassend eine Welle mit Außengewinde (27, 327), die in das Loch (55) der Wand zwischen wenigstens einem Paar der stacheligen Füße (75) eingefügt ist, wobei die Welle sich mit der gewindeeingreifenden Fläche der Befestigung (25, 325) verstrickt, und die Wand eine polymerische Innenbeschichtung (53) der Vorrichtung (23) ist.

6. Vorrichtungsgerät gemäß Anspruch 1, weiterhin umfassend:
eine Welle (27, 327) mit einem Kopf und einem entgegengesetzten Ende;
wobei der polymerische Kopf (73, 273) die gesamte gewindeeingreifende Fläche, die metallisch ist, unter Einschluss einer Bohrung darin, wenigstens vor dem Einführen der Welle (27, 327) komplett verkapselt; und
wobei ein Ende der Welle (27, 327) durch einen dünnen Querschnitt des polymerischen Materials der mit dem Loch (55) gefluchteten Befestigung bohrt, wenn die Welle (27, 327) durch die gesamte Befestigung (25, 325) eingefügt ist.

7. Vorrichtungsgerät gemäß Anspruch 1, wobei die Antirotationsfläche der Befestigung (25) eine zurückgesetzte Ausnehmung (81) einschließt.

8. Vorrichtungsgerät gemäß Anspruch 1, wobei die Antirotationsfläche der Befestigung (325) eine lateral hervorstehende Wand (281) einschließt, die sich radial relativ zu dem Kopf (273) erstreckt.

9. Vorrichtungsgerät gemäß Anspruch 1, wobei die Befestigung (25, 325) wenigstens vor dem Kontakt mit dem Schaum (61) an der Vorrichtung (23) durch wenigstens drei der polymerischen stacheligen Füße (75) gesichert und frei von einem Klebeband ist und die Füße (75) alle eine gekrümmte Außenfläche haben, die gegen das Loch (55) eingreifen, das kreisförmig ist.

10. Vorrichtungsgerät gemäß Anspruch 1, weiterhin umfassend einen Bodenträger, der an der Befestigung durch eine Welle mit Außengewinde (327) gesichert ist, die in die gewindeeingreifende Fläche der Befestigung (25, 325) eingreift, und die Vorrichtung (23) wenigstens eines ist: (a) ein Kühlschrank oder (b) ein Gefrierschrank.

11. Vorrichtungsgerät gemäß Anspruch 1, weiterhin umfassend einen rotierbaren Fußjustierer, der beweglich an der Befestigung (25, 325) befestigt ist, und die Wand ist eine äußere Metallhülle (51).

12. Verfahren zur Sicherung einer Befestigung (25, 325) an einer Vorrichtung (23), wobei das Verfahren umfasst:
(a) Fluchtung eines Bolzens (71), der an der Befestigung (25, 325) befestigt ist, mit einem Loch (55) in der Vorrichtung (23);
(b) Einführen von stacheligen Füßen (75) der Befestigung (25, 325) in das Loch (55) der Vorrichtung;
(c) Komprimieren eines flexiblen Schirms (77) der Befestigung (25, 325) gegen eine Fläche der Anwendung (23), wobei der Schirm eine Seite des Lochs (55) im Wesentlichen koaxial umgibt;
(d) Einfügen eines dämmenden Schaums (61), der an der Fläche der Vorrichtung und gegen den Schirm (77) der Befestigung anliegt; und
(e) Verhindern eines Lecks des dämmenden Schaums (61) durch das Loch wenigstens teilweise durch den Schirm (77).

13. Verfahren gemäß Anspruch 12, weiterhin umfassend das Prägen des Bolzens (71) aus Blech, bevor er durch ein polymerisches Material der Befestigung (25, 325) verkapselt wird.

14. Verfahren gemäß Anspruch 12, weiterhin umfassend das Einfügen des dämmenden Schaums (61) gegen polymerische Anti-Rotationsformationen (81, 281) der Befestigung (25) ohne die Verwendung von Klebeband zum Sichern oder Versiegeln der Befestigung (25, 325) an der Vorrichtung (23).

## Revendications

1. Appareil équipement (21) comprenant :
(a) un équipement (23) comprenant une paroi structurelle (51, 53), ayant un trou (55), et de la mousse (61) située contre la paroi ;
(b) une fixation (25, 325) comprenant au moins une patte barbelée polymérique (75) et une tête polymérique (73, 373), l'au moins une patte barbelée s'enclenchant opérationnellement à travers le trou (55) dans la paroi, la tête (73, 273) comportant au moins une surface antirotation (81, 281) qui est maintenue sensiblement immobile lors d'une mise en contact par la mousse (61), et une surface d'enclenchement de filet métallique située adjacente à la tête et alignée avec le trou (55) de la paroi ; et
(c) une protection polymérique flexible (77) s'étendant depuis la fixation (25, 325), la protection venant en contact contre une surface de la paroi et prévenant une fuite de la mousse (61) à travers le trou (55) dans la paroi.

2. Appareil équipement selon la revendication 1, dans lequel la surface d'enclenchement de filet fait partie d'un écrou métallique (71) attaché à la tête (73, 273), l'écrou comportant au moins une surface périphérique plate.

3. Appareil équipement selon la revendication 2, dans lequel l'écrou métallique (71) est sensiblement encapsulé au sein de la tête polymérique (73, 273), et l'au moins une patte barbelée polymérique (75) comporte un point orienté vers l'extérieur à l'opposé d'une ligne centrale du trou (55) de la paroi (51, 53), et le point est inséré totalement à travers le trou (55).

4. Appareil équipement selon la revendication 2, dans lequel l'écrou métallique (71) est une tôle d'acier estampée comportant une ouverture centrale (117) définissant un filet interne (133), et l'écrou métallique (71) comporte en outre un corps sensiblement polygonal (131) pour empêcher une rotation de l'écrou (71) par rapport à la tête de fixation polymérique (73).

5. Appareil équipement selon la revendication 1, comprenant en outre une tige filetée sur l'extérieur (27, 327) insérée dans le trou (55) de la paroi entre au moins une paire des pattes barbelées (75), la tige s'engrenant avec la surface d'enclenchement de filet de la fixation (25, 325), et la paroi est un revêtement intérieur polymérique (53) de l'équipement (23).

6. Appareil équipement selon la revendication 1, comprenant en outre :
une tige (27, 327) ayant une tête et une extrémité opposée ;
la tête polymérique (73, 273) encapsulant entièrement la totalité de la surface d'enclenchement de filet, qui est métallique, incluant un alésage à l'intérieur, au moins avant insertion de la tige (27, 327) ; et
une extrémité de la tige (27, 327) transperçant une section mince de matériau polymérique de la fixation alignée avec le trou (55), lorsque la tige (27, 327) est insérée à travers la fixation tout entière (25, 325).

7. Appareil équipement selon la revendication 1, dans lequel la surface antirotation de la fixation (25) comporte une cavité en retrait (81).

8. Appareil équipement selon la revendication 1, dans lequel la surface antirotation de la fixation (325) comporte une paroi saillant latéralement (281) s'étendant radialement par rapport à la tête (273).

9. Appareil équipement selon la revendication 1, dans lequel la fixation (25, 325) est arrimée à l'équipement (23) par au moins trois des pattes barbelées polymériques (75) et dépourvue d'adhésif, au moins avant une mise en contact par la mousse (61), et les pattes (75) ont toute une surface externe incurvée qui s'enclenche contre le trou (55) qui est circulaire.

10. Appareil équipement selon la revendication 1, comprenant en outre une console pour tablettes arrimée à la fixation par une tige filetée sur l'extérieur (327) enclenchant la surface d'enclenchement de filet de la fixation (25, 325), et l'équipement (23) est au moins l'un parmi : (a) un réfrigérateur, ou (b) un congélateur.

11. Appareil équipement selon la revendication 1, comprenant en outre un niveleur de patte rotatif attaché mobile à la fixation (25, 325), et la paroi est une tôle métallique extérieure (51).

12. Procédé d'arrimage d'une fixation (25, 325) à un équipement (23), le procédé comprenant :
(a) l'alignement d'un écrou (71), attaché à la fixation (25, 325), avec un trou (55) dans l'équipement (23) ;
(b) l'insertion de pattes barbelées (75) de la fixation (25, 325) dans le trou (55) de l'équipement ;
(c) la compression d'une protection flexible (77) de la fixation (25, 325) contre une surface de l'équipement (23), la protection entourant sensiblement coaxialement un côté du trou (55) ;
(d) l'insertion d'une mousse isolante (61) adjacente à la surface de l'équipement et contre la protection (77) de la fixation ; et
(e) la prévention de fuite de la mousse isolante (61) à travers le trou au moins en partie par la protection (77).

13. Procédé selon la revendication 12, comprenant en outre l'estampage de l'écrou (71) à partir de tôle de métal avant qu'il soit encapsulé par un matériau polymérique de la fixation (25, 325).

14. Procédé selon la revendication 12, comprenant en outre l'insertion de la mousse isolante (61) contre des formations polymériques antirotation (81, 281) de la fixation (25) sans l'utilisation de bande adhésive pour arrimer ou sceller la fixation (25, 325) à l'équipement (23).
